Europäisches Patentamt

European Patent Office

Office européen des brevets

(19)

(11) Veröffentlichungsnummer: **0 030 678**
**B1**

(12) **EUROPÄISCHE PATENTSCHRIFT**

(45) Veröffentlichungstag der Patentschrift:
**20.07.83**

(51) Int. Cl.³: **F 16 C 13/00,** F 16 N 7/02,
B 02 C 4/30

(21) Anmeldenummer: **80107555.7**

(22) Anmeldetag: **03.12.80**

(54) Vorrichtung zur Schmierung von Radialwellendichtringen bei Mahlrollen.

(30) Priorität: **17.12.79 DE 7935481 U**

(43) Veröffentlichungstag der Anmeldung:
**24.06.81 Patentblatt 81/25**

(45) Bekanntmachung des Hinweises auf die Patenterteilung:
**20.07.83 Patentblatt 83/29**

(84) Benannte Vertragsstaaten:
**BE DE FR GB**

(56) Entgegenhaltungen:
**CH-A-66 181**
**CH-A-588 645**
**DE-C-424 430**
**DE-C-699 917**
**DE-U-7 225 150**
**US-A-2 273 129**

(73) Patentinhaber: **Krupp Polysius AG,**
**Graf-Galen-Strasse 17, D-4720 Beckum (DE)**

(72) Erfinder: **Lohnherr, Ludger, Am Kirchplatz 4,**
**D-4740 Oelde-Sünninghausen (DE)**
Erfinder: **Holz, Walter, Berliner Strasse 4,**
**D-4730 Beckum-Neubeckum (DE)**

(74) Vertreter: **Tetzner, Volkmar, Dr.-Ing. Dr. Jur.,**
**Van-Gogh-Strasse 3, D-8000 München 71 (DE)**

ACTORUM AG

Vorrichtung zur Schmierung von Radialwellendichtringen bei Mahlrollen

Die Erfindung betrifft eine Vorrichtung zur Schmierung von paarweise nebeneinander angeordneten, durch einen Ringspalt voneinander getrennten Radialwellendichtringen am Lager einer Mahlrolle, mit einer Einrichtung zur Zuführung des Schmiermittels in den Ringspalt zwischen beiden Dichtringen sowie mit einer an den feststehenden Träger der Rollenkörper angeschlossenen Sperrluftleitung zur Zuführung von Sperrluft zu dem Raum, der an den dem Lager abgewandten Dichtring angrenzt.

Es ist eine Schmiereinrichtung für ein Gleitlager bekannt (DE-C Nr. 699917), bei der oberhalb des Lagers ein durch eine Falleitung mit dem Lager verbundener und nach aussen luftdicht abgeschlossener Schmierölvorrat vorgesehen ist. Die von diesem Schmierölvorrat zum Lager führende Leitung mündet in einer Schmiernut aus, über die sich das Schmiermittel im Innern des Lagers verteilt; an den Enden der Lagerstelle sind Ringnuten vorgesehen.

Da der Schmierölvorrat nach aussen luftdicht abgeschlossen ist, kann das Öl aus dem Vorratsbehälter nicht frei zum Lager strömen. Eine dosierte Ölzufuhr erfolgt nur bei einer kurzzeitigen Aufhebung des luftdichten Abschlusses des Schmieröl-Vorratsbehälters.

Nachteilig ist bei dieser bekannten Ausführung, dass unerwartet grosse Schmieröl-Leckverluste unter Umständen längere Zeit unerkannt bleiben und durch ein Trockenlaufen des Lagers zu schweren Lagerschäden führen. Ungünstig ist weiterhin, dass auch das Ersetzen der üblichen Schmieröl-Leckverluste eine ständige Überwachung und manuelle Betätigung (Herstellung der Strömungsverbindung zwischen dem Schmieröl-Vorratsbehälter und dem Lager) erfordert.

Es ist weiterhin ein wasserdichtes Lager bekannt (DE-C Nr. 424430), bei dem ein auf der Welle angeordneter Schmierring in einen grösseren Schmierölvorrat unterhalb der Welle eintaucht. Dabei ist der Innenraum des Lagers oberhalb des Ölreservoirs an eine Druckluftquelle angeschlossen, so dass ein Druckluftstrom ständig zwischen Welle und Lagerschale nach aussen strömt und Schmiermittel mitreisst. Nachteilig bei dieser Ausführung ist vor allem der hohe Ölverbrauch sowie der Druckluftbedarf.

Es ist schliesslich bekannt, die Schmierung von Radialwellendichtringen an den Lagern von Mahlrollen mit Fett durchzuführen, das jeweils nach einer gewissen Betriebszeit in eine Schmierbohrung eingepresst wird, die im feststehenden Rollenträger vorgesehen ist und in den Ringspalt zwischen den beiden Dichtringen ausmündet. Nachteilig ist bei dieser Ausführung vor allem, dass der dem Lager abgewandte Radialwellendichtring unter ungünstigen Betriebsverhältnissen trocken laufen und damit vorzeitig zerstört werden kann. Diese Gefahr besteht vor allem bei hohen Betriebstemperaturen, bei starkem Staubanfall oder bei einer Verstopfung der Schmierbohrung.

Der Erfindung liegt daher die Aufgabe zugrunde, unter Vermeidung der Mängel der bekannten Ausführungen eine Vorrichtung der eingangs genannten Art zu schaffen, die sich bei einfacher Bauweise durch eine besonders zuverlässige Schmierung der Dichtringe auszeichnet und die auch ein leichtes Auswechseln der Mahlrolle ermöglicht.

Diese Aufgabe wird erfindungsgemäss dadurch gelöst, dass mit dem zwischen den beiden Dichtringen vorhandenen Ringspalt ein höher als die Rollenkörper angeordnetes, zum ständigen Ausgleich von Leckverlusten dienendes, ölgefülltes Ausgleichsgefäss über eine innerhalb der Sperrluftleitung verlegte Ölleitung verbunden ist.

Bei der erfindungsgemässen Vorrichtung macht sich eine während des Betriebes etwa eintretende Undichtigkeit eines der beiden Radialwellendichtringe dadurch bemerkbar, dass der Ölspiegel stärker als bei normalem Ölverbrauch absinkt. Wird das Ausgleichsgefäss mit einem entsprechenden Warnsignalgeber ausgerüstet (was bei Schmiermittelbehältern bereits bekannt ist, vgl. CH-A Nr. 66181), so kann das Bedienungspersonal Abhilfemassnahmen treffen, ehe grössere Schäden eintreten.

Bei einer Undichtigkeit des lagerseitigen Radialwellendichtringes wird ein Ölverlust im Lager durch das aus dem Ausgleichsgefäss in das Lager nachlaufende Öl verhindert. Hierbei fliesst so lange Öl in das Lager der Mahlrolle ein, bis sich ein statischer Druckausgleich zwischen dem Lager und dem Ausgleichsgefäss einstellt. Ölverluste im Lager werden auf diese Weise gänzlich verhindert.

Ergibt sich andererseits eine Undichtigkeit an dem dem Lager abgewandten, luftseitigen Radialwellendichtring, so fliesst Öl aus dem Ausgleichsgefäss in den angrenzenden Raum, der über die Sperrluftleitung mit Sperrluft beaufschlagt ist. Der luftseitige Radialwellendichtring wird hierbei durch das nachlaufende Öl weiterhin geschmiert, so dass ein unbemerktes Trockenlaufen verhindert wird.

Da die Ölleitung innerhalb der Sperrluftleitung verlegt ist, wird ein guter Schutz der Ölleitung gegen Beschädigungen und einen dadurch verursachten Ausfall der Schmierung erreicht. Durch die gemeinsame Verlegung der beiden Leitungen wird ferner ein bequemes Auswechseln der Mahlrolle ermöglicht.

Ein Ausführungsbeispiel der Erfindung ist in der Zeichnung schematisch veranschaulicht. Es zeigen:

Fig. 1 eine Schemadarstellung eines Mahlrollenpaares mit der erfindungsgemässen Schmiervorrichtung, und

Fig. 2 und 3 Detaildarstellungen der in Fig. 1 mit II bzw. III markierten Bereiche.

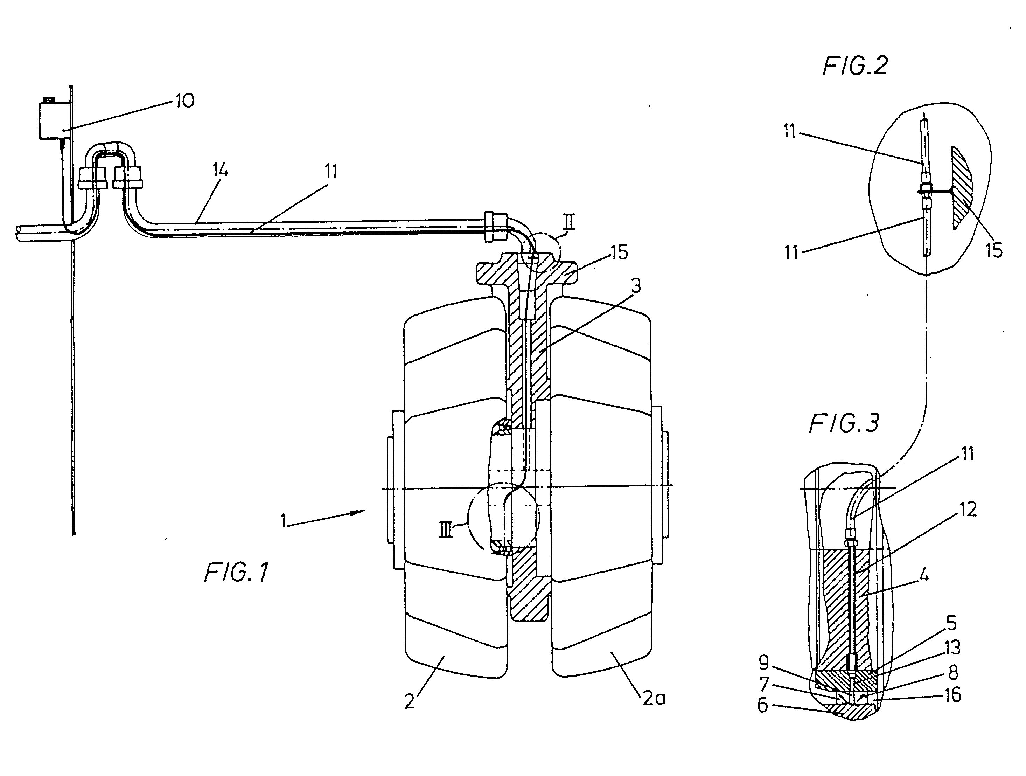

Das in Fig. 1 dargestellte Rollenpaar 1 einer Rollenmühle enthält zwei Rollenkörper 2, 2a und einen gemeinsamen, feststehenden Rollenträger 3. Dieser feststehende Rollenträger 3 enthält eine Achse 4 und eine gleichfalls feststehende Lauffläche 5.

Zum umlaufenden Teil des Rollenpaares 1 gehört ein innerer Lagerdeckel 6. Zwischen der feststehenden Laufläche 5 und dem umlaufenden inneren Lagerdeckel 6 sind zwei Radialwellendichtringe 7 und 8 angeordnet, die zwischen sich einen Ringspalt 9 freilassen.

Ein ölgefülltes Ausgleichsgefäss 10 ist über eine Ölleitung 11, ein an die Ölleitung 11 angeschlossenes, in der Achse 4 angeordnetes Rohr 12 und eine die Laufläche 5 durchsetzende Bohrung 13 mit dem Ringspalt 9 zwischen den beiden Dichtringen 7 und 8 verbunden.

Es ist weiterhin eine Sperrluftleitung 14 vorgesehen, die über einen Schraubanschluss 15 mit dem feststehenden Rollenträger 3 verbunden ist. Von der Sperrluftleitung 14 führen — im einzelnen aus der Zeichnung nicht ersichtliche — Verbindungsbohrungen zum Raum 16, der auf der dem Lager abgewandten Seite an den Dichtring 8 angrenzt. Der Dichtring 7 ist dagegen dem — gleichfalls nicht im einzelnen veranschaulichten — Lager des Rollenpaares 1 zugewandt.

Die Ölleitung 11 ist innerhalb der Sperrluftleitung 14 vom Ausgleichsgefäss 10 zum Schraubanschluss 15 geführt. Der Schraubanschluss 15 ist so ausgebildet, dass bei einem etwa erforderlichen Auswechseln des Rollenpaares 1 die Sperrluftleitung 14 und die darin angeordnete Ölleitung 11 auf einfache Weise abgenommen werden können.

Wie ferner Fig. 1 zeigt, ist das Ausgleichsgefäss 10 höher als der oberste Punkt der zum Rollenträger 3 führenden Ölleitung 11 angeordnet.

Die Funktion der erfindungsgemässen Schmiervorrichtung ist wie folgt:

Sind die beiden Radialwellendichtringe 7 und 8 in Ordnung, so treten aus dem Ringspalt 9 nur ganz geringe Ölmengen durch die Schmierspalte im Bereich der Dichtringe 7 und 8 hindurch. Der Ölspiegel im Ausgleichsgefäss 10 sinkt infolgedessen nur ganz langsam ab. Wird dagegen einer der beiden Dichtringe 7 bzw. 8 undicht, so sinkt der Ölspiegel im Ausgleichsgefäss 10 verhältnismässig rasch ab, was einen mit dem Ausgleichsgefäss verbundenen Warnsignalgeber ansprechen lässt.

## Patentansprüche

1. Vorrichtung zur Schmierung von paarweise nebeneinander angeordneten, durch einen ringspalt (9) voneinander getrennten Radialwellendichtringen (7, 8) am Lager einer Mahlrolle, mit einer Einrichtung zur Zuführung des Schmiermittels in den Ringspalt (9) zwischen beiden Dichtringen (7, 8) sowie mit einer an den feststehenden Träger (3) der Rollenkörper (2, 2a) angeschlossenen Sperrluftleitung (14) zur Zuführung von Sperrluft zu dem Raum (16), der an den dem Lager abgewandten Dichtring (8) angrenzt, dadurch gekennzeichnet, dass mit dem zwischen den beiden Dichtringen (7, 8) vorhandenen Ringspalt (9) ein höher als die Rollenkörper (2, 2a) angeordnetes, zum ständigen Ausgleich von Leckverlusten dienendes, ölgefülltes Ausgleichsgefäss (10) über eine innerhalb der Sperrluftleitung (14) verlegte Ölleitung (11) verbunden ist.

2. Vorrichtung nach Anspruch 1, dadurch gekennzeichnet, dass die Sperrluftleitung (14) und die darin verlegte Ölleitung (11) durch einen gemeinsamen Schraubanschluss (15) mit dem feststehenden Rollenträger (3) verbunden sind.

3. Vorrichtung nach Anspruch 2, dadurch gekennzeichnet, dass die Ölleitung (11) vom Schraubanschluss (15) durch den feststehenden Rollenträger (3) verläuft und über eine in der Laufläche (5) des feststehenden Rollenträgers (3) vorgesehene Bohrung (13) in den zwischen beiden Dichtringen (7, 8), vorhandenen Ringspalt (9) ausmündet.

## Claims

1. Device for lubricating radial shaft sealing rings (7, 8) which are arranged adjacent to each other in pairs and separated from each other by an annular clearance (9) on the bearing of a grinding roller, with an arrangement for supplying the lubricant to the annular clearance (9) between two sealing rings (7, 8) and with a barrier air duct (14) connected to the stationary support (3) for the roller bodies (2, 2a) for supply of barrier air to the space (16) bordering on the sealing ring (8) facing away from the bearing, characterised in that an oil-filled expansion tank (10) which is arranged higher than the roller bodies (2, 2a) for constant compensation for leakage losses is connected to the annular clearance (9) between the two sealing rings (7, 8) by an oil line (11) which is arranged inside the barrier air duct (14).

2. Device as claimed in claim 1, characterised in that the barrier air duct (14) and the oil line (11) arranged therein are connected by a common screw connection (15) to the stationary roller support (3).

3. Device as claimed in claim 2, characterised in that the oil line (11) runs from the screw connection (15) through the stationary roller support (3) and through a bore (13) provided in the bearing surface (5) of the stationary roller support (3) and opens into the annular clearance (9) between two sealing rings (7, 8).

## Revendications

1. Dispositif de lubrification de bagues à lèvre avec ressort (7, 8) du palier d'un cylindre de broyage, ces bagues étant juxtaposées deux à deux et séparées par un passage annulaire (9), et ledit dispositif comprenant une installation d'arrivée de lubrifiant dans le passage annulaire (9) situé entre les deux bagues d'étanchéité (7, 8), ainsi qu'une conduite (14) raccordée au support fixe (3) du corps des cylindres (2, 2a) et destinée à l'arrivée d'air de retenue dans l'espace (16) qui est voisin de la bague d'étanchéité (8) située du côté opposé à celui du palier, dispositif caractérisé en ce qu'une canalisation (11) posée à l'intérieur de ladite conduite d'air de retenue (14) raccorde le passage annulaire (9) situé entre les deux bagues d'étanchéité (7, 8) à un récipient (10) rempli d'huile, disposé à un niveau supérieur à celui du corps des cylindres (2, 2a) et destiné à la compensation permanente des pertes par fuites.

2. Dispositif selon la revendication 1, caractérisé en ce qu'un raccord fileté commun (15) raccorde la conduite d'air de retenue (14) et la canalisation d'huile (11) posée dans cette dernière au support fixe (3) du cylindre.

3. Dispositif selon la revendication 2, caractérisé en ce que la canalisation d'huile (11) passe du raccord fileté (15) à travers le support fixe (3) du cylindre et débouche dans le passage annulaire (9) situé entre les deux bagues d'étanchéité (7, 8) par un trou (13) réalisé dans la surface de roulement (5) du support fixe (3) du cylindre.

FIG.2

FIG.1

FIG.3

0 030 678